# EUROPEAN PATENT APPLICATION

(11) **EP 4 310 827 A1**
(43) Date of publication of application: **24.01.2024**
(21) Application number: 23185505.7
(22) Date of filing: 14.07.2023
(51) Int. Cl.: G09G 5/00, G09G 5/02

(54) **INTEGRATED CHIP INCLUDING INTERFACE, OPERATING METHOD THEREOF, AND ELECTRONIC DEVICE INCLUDING INTEGRATED CHIP**

(30) Priority: 18.07.2022 KR 20220088579
(71) Applicant: Samsung Electronics Co., Ltd., Suwon-si, Gyeonggi-do 16677 (KR)
(72) Inventor: SEONG, Hansoo, 16677 Suwon-si (KR); KIM, Hyojoon, 16677 Suwon-si (KR)
(74) Representative: Marks & Clerk LLP

(57) **Abstract**

An integrated chip communicating with another integrated chip includes a processor configured to generate user data including graphic data representing color space values of each of a plurality of pixels implementing a user image, and alpha data representing an alpha value that specifies how to blend video data and the graphic data and set a video format for transmitting the user data, and a first interface configured to transfer the user data in the video format to the other integrated chip.

## Description

### BACKGROUND

The present disclosure relates to an integrated chip, and more particularly, to an integrated chip including an interface, an operating method thereof, and an electronic device including the integrated chip.

Recently, as various video services using a network environment have become popular, high resolution user images and video images are blended and displayed on a display panel. A processor chip may generate high resolution user images. The processor chip needs to transmit user images to a digital TV chip that blends user images with video images. The processor chip may transmit graphic images included in user images via an interface, for example, a Mobile Industry Processor Interface (MIPI), a High Definition Multimedia Interface (HDMI), a Display Port (DP), Peripheral Component Interconnect express (PCIe), etc.

User images including alpha values and graphic images may not be transmitted to the digital TV chip through one interface channel. The processor chip needs an additional interface channel other than an interface channel transmitting graphic data in order to separate alpha data from user data, and transmit the separated alpha data to the digital TV chip.

### SUMMARY

The present disclosure provides an integrated chip used to transmit user data including graphic data and alpha data through one interface channel, and an operating method thereof. Transmitting an alpha data value and a graphic data value from one chip to another chip by using a single interface can reduce the overall processing time of transmitting data for the integrated chip.

In general, innovative aspects of the subject matter described in this specification can be embodied an integrated chip communicating with another integrated chip that includes: a processor configured to generate user data including graphic data representing color space values of each of a plurality of pixels implementing a user image, and alpha data representing an alpha value for blending video data and the graphic data and set a video format for transmitting the user data, and a first interface configured to transfer the user data in the video format to the other integrated chip.

In general, in another aspect, the subject matter of the present disclosure can be embodied in an electronic device that includes: a first integrated chip configured to generate user data corresponding to a user image including a first pixel and a second pixel, and a second integrated chip configured to receive the user data, wherein the first integrated chip includes a processor configured to set a video format for transmitting first luminance data, first blue chrominance data, and first red chrominance data, which correspond to the first pixel, and second luminance data corresponding to the second pixel, and an interface configured to access first alpha data, first color space data, second color space data, and third color space data that are user data corresponding to the first pixel respectively correspond to the first luminance data, the first blue chrominance data, the first red color space data, and the second luminance data, and transmit the first alpha data, the first color space data, the second color space data, and the third color space data to the second integrated chip.

In general, in another aspect, the subject matter of the present disclosure can be embodied in operating method an integrated chip, the operating method including: generating user data including graphic data representing color space values of each of a plurality of pixels implementing a user image, and alpha data representing an alpha value for blending video data and the graphic data, setting a video format for transmitting the user data to another integrated chip alpha blending the graphic data and the video data based on the alpha data, and outputting the user data based on the set video format.

At least some of the above and other features of the invention are set out in the claims.

### BRIEF DESCRIPTION OF THE DRAWINGS

Examples of the present disclosure will be more clearly understood from the following detailed description taken in conjunction with the accompanying drawings in which:
FIG. 1 is a block diagram illustrating an example of a video system;
FIG. 2 is a diagram illustrating an example of user data;
FIG. 3 is a block diagram illustrating an example of an integrated chip;
FIG. 4 is a diagram illustrating an example of a method of transmitting user data;
FIG. 5 is a diagram illustrating an example of a method of transmitting user data through an interface;
FIG. 6 is a diagram illustrating an example of a first interface;
FIG. 7 is a diagram illustrating an example of a method of transmitting user data through a High Definition Multimedia Interface (HDMI);
FIG. 8 is a diagram illustrating an example of transmission of graphic data and user data;
FIG. 9 is a diagram illustrating an example of an order in which user data is transmitted;
FIG. 10 is a diagram illustrating an example of a method of compressing user data; and
FIG. 11 is a flowchart illustrating an example of an operating method of an integrated chip.

### DETAILED DESCRIPTION

Hereinafter, examples of the present disclosure will be described in detail with reference to the accompanying drawings.

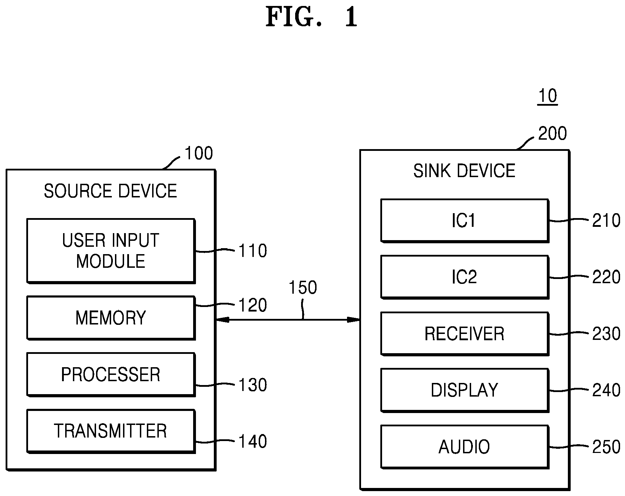

FIG. 1 is a block diagram illustrating an example of a video system.

Referring to FIG. 1, a video system 10 may include a source device 100 and a sink device 200. The video system 10 may further include other general purpose components in addition to components illustrated in FIG. 1.

The source device 100 may be an electronic device that generates content data by itself or receives content data. The source device 100 may be implemented as a variety of types, such as an optical media playback device such as Digital Video Disk (DVD) or Blu-ray, an Ultra High Definition (UHD) player, a set-top box, a television, a computer body, a mobile device, a home theater, a game device, a content server, etc. The content data may include video data or audio data. Alternatively, the content data may include video data and audio data.

In some implementations, the source device 100 includes a user input module 110, a memory 120, a processor 130, and a transmitter 140.

The user input module 110 may be a module provided to be manipulated by a user. The user input module 110 may include various types of input interface related circuits. For example, the user input module 110 may be implemented in various forms, such as a mechanical or electronic button of the source device 100, a remote controller separated from a main body of the source device 100, a touchpad, a touch screen, etc.

The memory 120 may read stored data and output the read data under the control of the processor 130. Alternatively, the memory 120 may store data under the control of the processor 130. The memory 120 may store content data. The memory 120 may be implemented as a non-volatile memory that stores data regardless of power supply or a volatile memory that operates only when power is supplied. The non-volatile memory may be a flash memory and/or a read only memory (ROM), and the flash memory may include, for example, a NAND flash memory, a NOR flash memory, etc. The volatile memory may include, for example, DRAM, SRAM, etc.

The processor 130 may generally control the source device 100. The processor 130 may control the memory 120 to output content data. The processor 130 may output content data in a format supported by the sink device 200.

The transmitter 140 may transmit content data to the sink device 200. The transmitter 140 may transmit content data to a receiver 230 of the sink device 200. Specifically, the transmitter 140 may transmit content data to the receiver 230 through a communication channel 150.

The communication channel 150 may transmit content data output from the source device 100 to the receiver 230. The communication channel 150 may include any wireless or wired communication medium, such as a radio frequency (RF) spectrum, one or more physical transmission lines, or any combination of wireless and wired media. Communication channel 150 may form part of a packet-based network, such as a local area network, a wide area network, or a global network such as the Internet. The communication channel 150 generally represents any suitable communication medium or a set of different communication media to transmit content data from the source device 100 to the sink device 200.

The sink device 200 may be an electronic device that processes and reproduces content data transmitted from the source device 100. Here, the term "reproduction" means displaying an image according to the processed video data, outputting audio according to the processed audio data, or representing an image and audio according to the processed video data and audio data. The sink device 200 may be implemented in various forms, such as a TV, a monitor, a portable multimedia player, a mobile phone, a tablet, an electronic picture frame, an electronic blackboard, an electronic billboard, etc.

In some implementations, the sink device 200 includes a first integrated chip 210, a second integrated chip 220, the receiver 230, a display 240, and an audio device 250.

The first integrated chip 210 may receive video data from the source device 100. The first integrated chip 210 may perform image processing on the video data. Here, "image processing" means performing at least one of encoding or decoding on video data or performing graphic processing on video data. When the video data is compressed, the video data may be decompressed. When compression is required, the first integrated chip 210 may compress the video data and transmit the video data to the second integrated chip 220. The first integrated chip 210 may perform image processing on the video data received from the sink device 200 and transmit the video data to the second integrated chip 220.

The first integrated chip 210 may generate user data. The user data may be displayed on the display 240 in an overlapping state with the video data. The user data may include graphic data and alpha data. Here, "graphic data" refers to data representing color space values of each pixel with respect to each of a plurality of pixels implementing a user image, and "alpha data" means an alpha value for blending video data and graphic data. User data generated by the first integrated chip 210 may be transmitted to the second integrated chip 220, and the second integrated chip 220 may blend graphic data and video data based on the alpha data.

The first integrated chip 210 may communicate with the second integrated chip 220. The second integrated chip 220 may mean an integrated chip different from the first integrated chip 210. In some implementations, the first integrated chip 210 and the second integrated chip 220 are implemented separately from each other. An interface for data transfer is required between the first integrated chip 210 and the second integrated chip 220. In some implementations, the interface includes a MIPI, a HDMI, a DP, PCIe, etc.

The user data may be transmitted to the second integrated chip 220 through the interface. The user data may be transmitted through an interface channel different from a channel through which video data is transmitted. The graphic data may include three pieces of color space data, and the user data may include four components because the user data includes alpha data and graphic data.

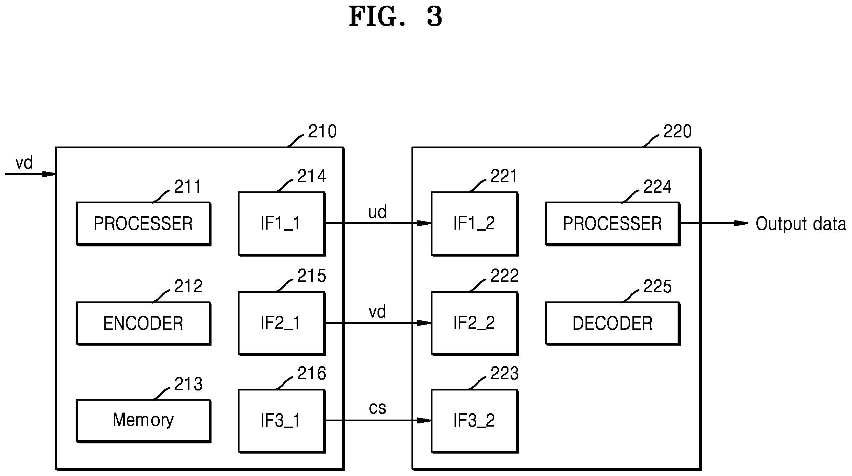

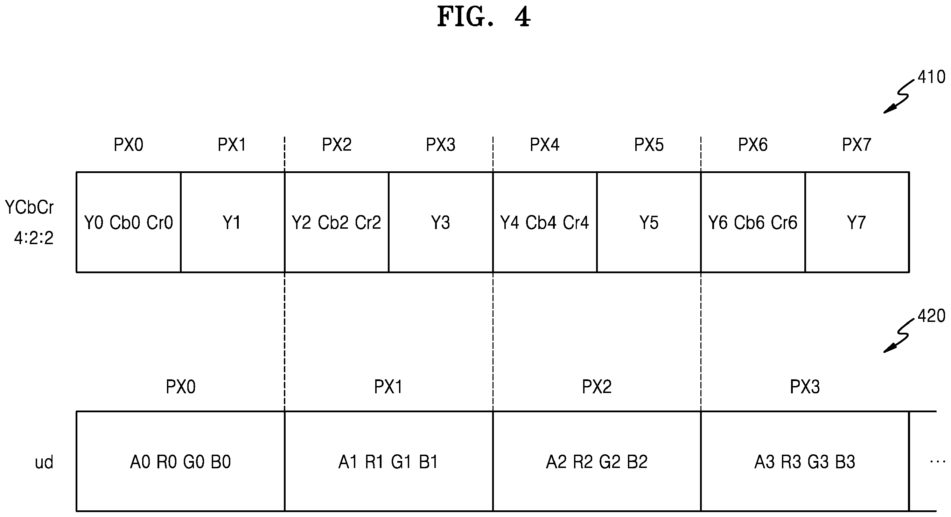

The integrated chip according to the present disclosure may transmit four components through one interface channel. The first integrated chip 210 may transmit the user data through one interface channel. The first integrated chip 210 may set a video format for transmitting the user data. The first integrated chip 210 may transmit the user data to the second integrated chip 220 in the set video format. In some implementations, the first integrated chip 210 may set the video format in the YCbCr 4:2:2 format and transmit the user data in the YCbCr 4:2:2 format to the second integrated chip 220. A method performed by the first integrated chip 210 of setting a video format and transmitting user data is described below in detail with reference to FIGS. 3 and 4.

The first integrated chip 210 may encode the user data. The first integrated chip 210 may encode the user data and transmit the encoded user data to the second integrated chip 220. The first integrated chip 210 may transmit the user data encoded in the video format to the second integrated chip 220. In some implementations, the first integrated chip 210 encodes the user data by using a display stream compression technique.

The first integrated chip 210 may refer to a data processing device capable of processing data, such as a central processing unit (CPU), a graphical processor unit (GPU), a processor, a microprocessor, or an application processor (AP). In some implementations, the first integrated chip 210 is implemented as a system-on-a-chip (SoC), and accordingly, may be embedded in an electronic device.

The second integrated chip 220 may receive video data and user data from the first integrated chip 210. The second integrated chip 220 may receive video data and user data through different interface channels, respectively. For example, the second integrated chip 220 may receive user data through a first interface and receive video data through a second interface.

The second integrated chip 220 may perform image processing on video data and user data. The second integrated chip 220 may process video data and user data in a format displayable on the display 240. The second integrated chip 220 may process the video data and the user data so that a blended image obtained by blending the video data and the graphic data is displayed on the display 240. The second integrated chip 220 may blend user data and graphic data based on the alpha data. The second integrated chip 220 may decode user data and video data, and may improve image quality.

The receiver 230 may receive content data from the source device 100 through the communication channel 150. In some implementations, the receiver 230 may be included in the first integrated chip 210. The first integrated chip 210 may receive content data from the source device 100. For example, the first integrated chip 210 may receive video data from the source device 100.

The transmitter 140, the communication channel 150, and the receiver 230 may be configured for communication according to any wired or wireless communication system including one or more Ethernet, telephone, cable, power-line and fiber optic systems and/or time division multiple access (TDMA) systems such as one or more code division multiple access (CDMA or CDMA2000) communication systems, division multiple access (FDMA) systems, orthogonal frequency division multiple (OFDM) access systems, and global mobile communication (GSM) systems, a General Packet Radio Service (GPRS) or Enhanced Data GSM Environment (EDGE), and Terrestrial Trunked Radio (TETRA) Mobile Telephone System, a Wideband Code Division Multiple Access (WCDMA) System, High Data Rate 1xEV-DO (1st Generation Evolution Data Only) or 1xEV-DO Gold Multicast System, an IEEE 802.18 System, a DMB System, a DVB-H system or a wireless system including other schemes for data communication between two or more devices.

The display 240 may display an image based on the video data processed by the second integrated chip 220. The display 240 may display an image based on output data in which video data and user data are blended. The sink device 200 may display output data to the user through the display 240. The display 240 may refer to a display panel. The display panel is a display portion on which an actual image is displayed, and may be one of display devices that receive an electrically transmitted image signal and display a two-dimensional (2D) image, such as a thin film transistor-liquid crystal display (TFT-LCD), an organic light emitting diode (OLED) display, a field emission display, a plasma display panel (PDP), etc. The display panel may be implemented as another type of flat panel display or a flexible display panel. In some implementations, the display 240 displays an 8K image, but is not limited thereto.

The audio device 250 may output audio based on audio data transmitted from the source device 100.

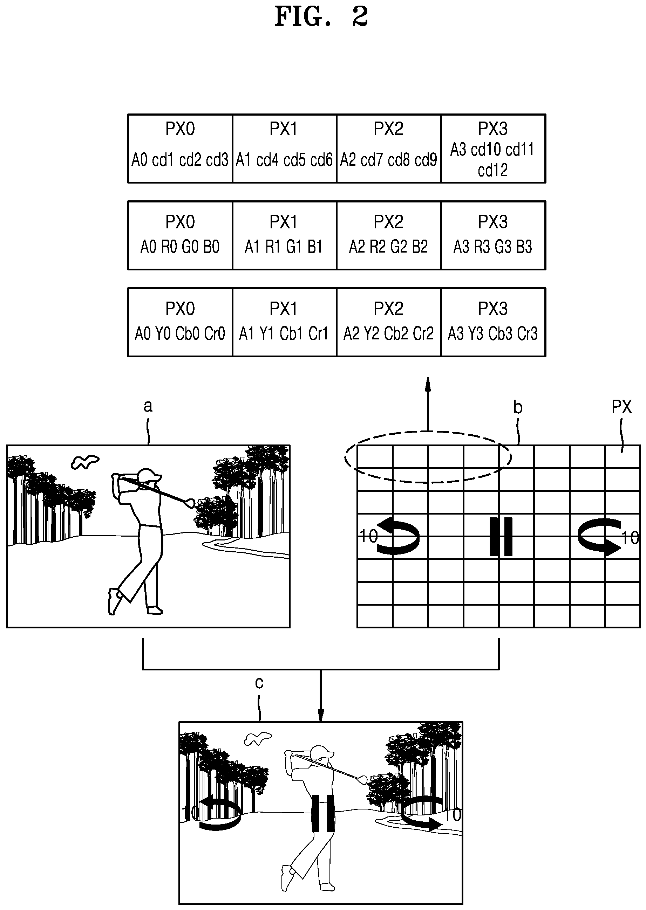

FIG. 2 is a diagram illustrating an example of user data.

A video image a may be transferred from a source device to a sink device in the form of video data. A user image b may be generated by a first integrated chip (e.g., the first integrated chip 210 of FIG. 1) to provide user convenience. The user image b may refer to an image related to a graphic user interface such as an On Screen Display (OSD).

The user image b may be overlapped with the video image a. That is, the user image b may be superimposed over the video image a. The user image b and the video image a may be blended to generate a blended image c. The user image b may correspond to user data. The user image b may be implemented as the user data.

The user image b may be implemented in a plurality of pixels PX. Each of the plurality of pixels PX included in the user image b may be represented by alpha data and graphic data corresponding to each of the plurality of pixels PX. The graphic data may refer to data representing color space values of each pixel PX, and the alpha data may refer to an alpha value for blending video data and graphic data. The alpha value may represent transparency of each pixel PX in the user data b. Graphic data and video data may be blended based on the alpha data.

The user data may include graphic data and alpha data. The user data corresponding to each of the plurality of pixels PX may include graphic data and alpha data. For example, the user data corresponding to a first pixel PX0 may include first alpha data A0 and graphic data cd1, cd2, and cd3. The user data corresponding to a second pixel PX1 may include second alpha data A1 and graphic data cd4, cd5, and cd6.

The graphic data may include a plurality of pieces of color space data. Each of the plurality of color space data may represent any one of luminance information and color information. In some implementations, the graphic data may include three pieces of color space data. For example, the user data corresponding to the first pixel PX0 may include the first alpha data A0, first color space data cd1, second color space data cd2, and third color space data cd3. The user data corresponding to the second pixel PX1 may include the second alpha data A1, fourth color space data cd4, fifth color space data cd5, and sixth color space data cd6. User data corresponding to a third pixel PX2 may include third alpha data A2, seventh color space data cd7, eighth color space data cd8, and ninth color space data cd9. User data corresponding to a fourth pixel PX3 may include fourth alpha data A3, tenth color space data cd10, eleventh color space data cd11, and twelfth color space data cd12.

In some implementations, graphic data corresponding to each of the plurality of pixels PX may be expressed as RGB data. The graphic data may include red data, green data, and blue data. For example, the first color space data cd1 may be red data, the second color space data cd2 may be green data, and the third color space data cd3 may be blue data. The fourth color space data cd4 may be red data, the fifth color space data cd5 may be green data, and the sixth color space data cd6 may be blue data. That is, the user data corresponding to the first pixel PX0 may include the first alpha data A0, first red data R0, first green data G0, and first blue data B0. The user data corresponding to the second pixel PX1 may include the second alpha data A1, second red data R1, second green data G1, and second blue data B1.

In some implementations, graphic data corresponding to each of the plurality of pixels PX may be expressed in an YCbCr color space. The graphic data may include luminance data Y, blue chrominance data Cb, and red chrominance data Cr. For example, the first color space data cd1 may be luminance data, the second color space data cd2 may be blue chrominance data, and the third color space data cd3 may be red chrominance data. The fourth color space data cd4 may be luminance data, the fifth color space data cd5 may be blue chrominance data, and the sixth color space data cd6 may be red chrominance data. That is, the user data corresponding to the first pixel PX0 may include the first alpha data A0, first luminance data Y0, first blue chrominance data Cb0, and first red chrominance data Cr0. The user data corresponding to the second pixel PX1 may include second alpha data A1, second luminance data Y1, second blue chrominance data Cb1, and second red chrominance data Cr1.

Each piece of data included in the user data may have a variable number of bits. For example, each piece of data included in the user data may be expressed by 8 bits. When graphic data is RGB data, each of red data, green data, and blue data may have one of 256 levels. For example, when RGB data is (255, 255, 255), the RGB data may represent white, and when RGB data is (0, 0, 0), the RGB data may represent black. However, the present disclosure is not necessarily limited thereto.

FIG. 3 is a block diagram illustrating an example of an integrated chip. The first integrated chip 210 and the second integrated chip 220 of FIG. 3 correspond to the first integrated chip 210 and the second integrated chip 220 of FIG. 1, respectively, and thus, redundant descriptions thereof are omitted.

Referring to FIG. 3, the first integrated chip 210 may include a processor 211 and interfaces 214, 215, and 216. The processor 211 may control the overall operation of the first integrated chip 210. The processor 211 may include one or more of a central processing unit (CPU), a graphic processing unit (GPU), and an application processor (AP). The processor 211 may, for example, perform an operation or data processing related to control and/or communication of one or more other components of the first integrated chip 210.

The processor 211 may generate user data ud. The processor 211 may generate a user image and generate alpha values and color space values corresponding to the user image. The user data ud may include graphic data and alpha data.

The processor 211 may set a video format for transmitting the user data ud. For example, the processor 211 may set the video format to the YCbCr 4:2:2 format in order to transmit the user data ud. That is, the processor 211 may control the first interface 214 to transmit the user data ud in the YCbCr 4:2:2 format. The YCbCr 4:2:2 format samples chroma at 50% of the rate of the sampling for luminance. In YCbCr 4:2:2 format, the 4 is the horizontal sampling reference (in this case 4 pixels) and each 2 represents the number of chroma samples in the horizontal and vertical directions respectively. In the YCbCr 4:2:2 format, adjacent pairs of pixels share chroma values. The YCbCr 4:2:2 format takes advantage of the human visual system's lower acuity for color differences than for luminance in order to compress the graphic data. The user data ud may be transmitted to the second integrated chip 220 through the first interface 214. The user data ud including four components may be transmitted to the second integrated chip 220 through the first interface 214 in the YCbCr 4:2:2 format. A method of transmitting the user data ud is described in detail below with reference to FIG. 4.

The processor 211 may perform image processing on video data vd received from the source device (e.g., the source device 100 of FIG. 1). The video data vd on which image processing is performed may be transmitted to the second integrated chip 220 through the second interface 215.

The processor 211 may generate a control signal cs for controlling the operation of the second integrated chip 220. The control signal cs may control operations of registers included in the second integrated chip 220. For example, the control signal cs may notify signals transmitted through the first interface 214, the second interface 215, and the third interface 216.

In some implementations, the control signal cs may include a recognition control signal. The recognition control signal may refer to a signal for controlling the second integrated chip 220 to recognize data of the user data ud. For example, when the video format is set to YCbCr 4:2:2, the processor 211 may generate the recognition control signal to control the second integrated chip 220 to recognize the user data ud as alpha data and graphic data. The control signal cs may be transmitted to the second integrated chip 220 through the third interface 216. When the recognition control signal is transmitted to the second integrated chip 220, the second integrated chip 220 may recognize the user data ud as alpha data and graphic data rather than just graphic data of the YCbCr 4:2:2 format.

The first integrated chip 210 may communicate with the second integrated chip 220. In some implementations, the first integrated chip 210 may communicate with the second integrated chip 220 via the interfaces 214, 215, and 216 and interfaces 217, 218, and 219.

The first integrated chip 210 may include the first interface 214, the second interface 215, and the third interface 216. The first interface 214 may transmit the user data ud to the second integrated chip 220. Specifically, the processor 211 may control the first interface 214 to transmit the user data ud. The first interface 214 may transmit the user data ud in the video format set by the processor 211 to the second integrated chip 220. In some implementations, the first interface 214 supports the video format of YCbCr 4:2:2.

The first interface 214 may be one of a MIPI, a HDMI, a DP, and PCIe.

In some implementations, the first interface 214 transmits the user data ud in the YCbCr 4:2:2 format corresponding to a type of the first interface 214. When the first interface 214 is the HDMI, a method of transmitting the user data ud in the YCbCr 4:2:2 format may be different from a method of transmitting the user data ud in the YCbCr 4:2:2 format when the first interface 214 is the DP. For example, when the first interface 214 is HDMI, the order of transmitting user data ud in the YCbCr 4:2:2 format is different from the order in the YCbCr 4:2:2 format when the first interface 214 is DP. The order in which the user data ud is transmitted may be different.

The second interface 215 may transmit the video data vd to the second integrated chip 220. The processor 211 may control the second interface 215 to transmit the video data vd. The second interface 215 may be one of a MIPI, a HDMI, a DP, and PCIe.

The third interface 216 may transmit the control signal cs to the second integrated chip 220. The processor 211 may control the third interface 216 to transmit the control signal cs. The third interface 216 may be one of a MIPI, a HDMI, a DP, and PCIe.

The first interface 214, the second interface 215, and the third interface 216 may mean different interface channels. For example, the video data vd and user data ud may not be transmitted through the second interface 215. The first interface 214, the second interface 215, and the third interface 216 may be different types of interfaces. For example, the first interface 214 may be the MIPI, the second interface 215 may be the DP, and the third interface 216 may be the PCIe. The first interface 214, the second interface 215, and the third interface 216 may be the same type of interfaces. For example, the first interface 214, the second interface 215, and the third interface 216 may be DPs. Also, two of the first interface 214, the second interface 215, and the third interface 216 may be the same type of interfaces. For example, the first interface 214 and the second interface 215 may be DPs, and the third interface 216 may be the PCIe, but the present disclosure is not necessarily limited to the above-described examples.

The first integrated chip 210 may further include an encoder 212. The encoder 212 may encode the user data ud. The encoder 212 may encode the user data ud by performing quantization operations and entropy decoding operations on the user data ud according to intra- or inter-based prediction. The encoder 212 may operate according to a video compression scheme such as Display Stream Compression (DSC), Advanced Video Coding (AVC), VP8, VP9, High Efficiency Video Coding (HEVC), AOMedia Video 1 (AV1), AVS3, etc.

In some implementations, the encoder 212 converts and compresses alpha data, first color space data, second color space data, and third color space data respectively corresponding to pixels included in the user data ud into independent components. The encoder 212 may encode the video data vd.

The first integrated chip 210 may include a memory 213. The memory 213 may store at least one of the user data ud or the video data vd. The processor 211 may read the user data ud stored in the memory 213 and control the first interface 214 to transmit the user data ud. The processor 211 may control the first interface 214 to read and transmit user data ud from the memory 213 in a set video format. For example, the processor 211 may control the first interface 214 to read and transmit the user data ud from the memory 213 in the YCbCr 4:2:2 format. The processor 211 may read the video data vd stored in the memory 213 and control the second interface 215 to transmit the video data vd.

The memory 213 may include a volatile memory such as Dynamic RAM (DRAM), Synchronous RAM (SDRAM), etc., and/or a non-volatile memory such as Phase-change RAM (PRAM), Magneto-resistive RAM (MRAM), Resistive RAM (ReRAM), Ferro-electric RAM (FRAM), etc.

The second integrated chip 220 may include a first interface 221, a second interface 222, and a third interface 223. The first interface 221 may receive the user data ud from the first integrated chip 210. The first interface 221 may receive the user data ud in a video format set by the first integrated chip 210. For example, the first interface 221 may receive the user data ud in the video format of YCbCr 4:2:2.

The second interface 222 may receive the video data vd from the first integrated chip 210. The third interface 223 may receive the control signal cs from the first integrated chip 210. Each of the first interface 221, the second interface 222, and the third interface 223 may be one of a MIPI, a HDMI, a DP, and PCIe.

The second integrated chip 220 may include a processor 224 and a decoder 225. The processor 224 may control the overall operation of the second integrated chip 220. The processor 224 may be implemented as a digital signal processor (DSP) processing a digital image signal, a microprocessor, a graphics processing unit (GPU), an artificial intelligence (AI) processor, and a time controller (TCON). However, the present disclosure is not limited thereto, and the processor 224 may include one or more of a CPU, a GPU, a micro controller unit (MCU), a micro processing unit (MPU), an AP, and an ARM processor or may be defined as the corresponding term. In addition, the processor 224 may be implemented in the form of a system on chip (SoC) with an embedded processing algorithm, large scale integration (LSI), or a field programmable gate array (FPGA).

The processor 224 may perform image processing on the user data ud and the video data vd and generate output data. The output data may be an image having a standard definition (SD), high definition (HD), full HD, ultra HD (UHD), 8K (7680x4320) or higher resolution (e.g., 16K, 32K), but is limited thereto.

The processor 224 may receive the control signal cs through the third interface 223. In some implementations, the processor 224 recognizes data received through each of the interfaces 221, 222, and 223 based on the control signal cs. For example, the processor 224 may recognize data received through the first interface 221 as the user data ud, and may recognize data received through the second interface 222 as the video data vd, based on the control signal cs.

The processor 224 may recognize the set video format based on the control signal cs. The processor 224 may recognize that the first interface 221 has received the user data ud in a 4:2:2 format based on the control signal cs. When receiving the recognition control signal, although the video format is set to YCbCr 4:2:2, the processor 224 may recognize the user data ud as alpha data and graphic data. For example, when receiving the recognition control signal, the processor 224 may recognize fourth data received through the first interface 221 as alpha data of a first pixel rather than luminance data of a second pixel.

The processor 224 may receive the user data ud and the video data vd, and perform image processing for image quality improvement. Also, the processor 224 may generate output data based on the user data ud and the video data vd. The processor 224 may generate a blended image by alpha blending graphic data and the video data vd based on the alpha data, and may output the blended image as output data. The output data may be displayed on a display (e.g., the display 240 of FIG. 1). The processor 224 may alpha blend the graphic data and the video data vd based on alpha data corresponding to each of a plurality of pixels implementing a user image.

Here, "alpha blending" means a method of allocating a new value called alpha data to color space data to create an effect of transparency when another image is overlapped on an image, and blending and displaying a background color space data value and a color space data value thereon. The processor 224 may blend and display RGB data values that are the graphic data and RGB data values that are the video data vd based on the alpha data. The alpha data may represent the transparency of the overlapping image (in this case, the graphical data) once superimposed over the background data (in this case, the video data). The alpha data may be divided into 0 to 255 or 0.0 to 1.0. 0 may mean completely transparent, and 255 (or the highest value such as 1.0) opposite thereto may mean fully opaque. Alternatively, 0 may mean completely opaque, and 255 (or the highest value such as 1.0) opposite thereto may mean completely transparent. For example, when 8 bits are allocated to alpha data and values ranging from 0 to 255 may be expressed, the greater the value, the higher the ratio of the corresponding pixel, and the smaller the value, the lower the ratio.

The second integrated chip 220 may further include the decoder 225. The decoder 225 may decode the user data ud and the video data vd. The decoder 225 may perform inverse quantization operations and entropy decoding operations on the user data ud according to intra or inter-based prediction and decode the user data ud and the video data vd. The decoder 225 may operate according to a video compression scheme such as DSC, AVC, VP8, VP9, HEVC, AV1, AVS3, etc.

FIG. 4 is a diagram illustrating an example of a method of transmitting user data. Hereinafter, the method of transmitting user data is described together with reference to FIG. 3.

Referring to FIG. 4, graphic data 410 may be transmitted in the YCbCr 4:2:2 format. The graphic data 410 may include color space data corresponding to each of a plurality of pixels implementing a user image. The color space data may include luminance data, blue chrominance data, and red chrominance data. In some implementations, the graphic data 410 may be chroma subsampled in the YCbCr 4:2:2 format. The graphic data 410 may be chroma subsampled in the YCbCr 4:2:2 format so that the color space data may be reduced.

The graphic data 410 may include a plurality of pieces of color space data corresponding to odd-numbered pixels, and may transmit one piece of color space data corresponding to an even-numbered pixel. For example, the graphic data 410 corresponding to the first pixel PX0 may include the first luminance data Y0, the first blue chrominance data Cb0, and the first red chrominance data Cr0. The graphic data 410 corresponding to the second pixel PX1 may include the second luminance data Y1. The graphic data 410 corresponding to the third pixel PX2 may include third luminance data Y2, third blue chrominance data Cb2, and third red chrominance data Cr2. The graphic data 410 corresponding to the fourth pixel PX3 may include fourth luminance data Y3.

The first interface 214 may support the YCbCr 4:2:2 format. The first interface 214 may transmit the graphic data 410. In some implementations, the first interface 214 transmits a plurality of pieces of color space data corresponding to odd-numbered pixels and transmit one piece of color space data corresponding to an even-numbered pixel. The YCbCr 4:2:2 format is used to transfer a subset of data from a set of data. The subset includes the first luminance data Y0, the first blue chrominance data Cb0, the first red chrominance data Cr0, and the second luminance data Y1. The set includes first luminance data Y0, the first blue chrominance data Cb0, the first red chrominance data Cr0, the second luminance data Y1, the second blue chrominance data Cb1, and the second red chrominance data Cr1.

In some implementations, the first interface 214 transmits first color space data, second color space data, third color space data, and fourth color space data as four components. For example, the first interface 214 may transmit the first luminance data Y0, the first blue chrominance data Cb0, and the first red chrominance data Cr0 corresponding to the first pixel PX0 and the second luminance data Y1 corresponding to the second pixel PX1 as four components. The third luminance data Y2, the third blue chrominance data Cb2, the third red chrominance data Cr2, and the fourth luminance data Y3 may be transmitted through the first interface 214 as four components.

The processor 211 may control the first interface 214 to transmit the first color space data, the second color space data, the third color space data, and the fourth color space data as four components. In detail, the processor 211 may control the first interface 214 to transmit the first luminance data Y0, the first blue chrominance data Cb0, and the first red chrominance data Cr0 corresponding to the first pixel PX0 and the second luminance data Y1 corresponding to the second pixel PX1.

User data 420 may include alpha data and graphic data. The user data 420 corresponding to the first pixel PX0 may include first alpha data A0, first red data R0, first blue data B0, and first green data G0. The user data 420 corresponding to the second pixel PX1 may include second alpha data A1, second red data R1, second blue data B1, and second green data G1. The user data 420 includes RGB data in FIG. 4, but is not necessarily limited thereto, and may include YCbCr data.

The first integrated chip 210 may transmit the user data 420 in the YCbCr 4:2:2 format. The first integrated chip 210 may transmit alpha data and graphic data in the YCbCr 4:2:2 format at a time. The processor 211 may set a video format to YCbCr 4:2:2. The processor 211 may set the video format to transfer the first luminance data Y0, the first blue chrominance data Cb0, and the first red chrominance data Cr0 corresponding to the first pixel PX0 and the second luminance data Y1 corresponding to the second pixel PX1.

The first integrated chip 210 may transmit the user data 420 in the set YCbCr 4:2:2 format. The first integrated chip 210 may transmit alpha data and graphic data to the second integrated chip 220 without separating the alpha data from the user data 420. Specifically, the processor 211 may control the first interface 214 to transmit the user data 420 including alpha data and graphic data in the YCbCr 4:2:2 format. The user data 420 including the alpha data is transmitted, and the process of separating the alpha data from the graphic data may be avoided, and thus, the processing time may be reduced. Even when there is no additional interface for transmitting the separated alpha data, the alpha data and the graphic data may be transmitted together, and thus, the production cost may be reduced.

The first interface 214 may transmit the user data 420 to the second integrated chip 220 in the YCbCr 4:2:2 format. The second integrated chip 220 may receive the user data 420 through the first interface 221.

The first interface 214 may access the first alpha data A0, the first color space data, the second color space data, and the third color space data, which are the user data 420 corresponding to the first pixel PX0, respectively corresponding to the first luminance data Y0, the first blue chrominance data Cb0, the first red chrominance data Cr0, and the second luminance data Y1, which are the graphic data 410, and transmit the first alpha data A0, the first color space data, the second color space data, and the third color space data to the second integrated chip 220. For example, the first interface 214 may access the first alpha data A0, the first red data R0, the first green data G0, and the first blue data B0 respectively corresponding to the first luminance data Y0, the first blue chrominance data Cb0, the first red chrominance data Cr0, and the second luminance data Y1, and transmit the first alpha data A0, the first red data R0, the first green data G0, and the first blue data B0 to the second integrated chip 220.

Each of the first alpha data A0, the first color space data, the second color space data, and the third color space data may correspond not to overlap any one of the first luminance data Y0, the first blue chrominance data Cb0, and the first red chrominance data Cr0, and the second luminance data Y1. For example, the first alpha data A0, the first red data R0, the first green data G0, and the first blue data B0 may respectively correspond to the first luminance data Y0, the first blue chrominance data Cb0, and the first red chrominance data Cr0, and the second luminance data Y1. However, the present disclosure is not necessarily limited thereto, and the first red data R0, the first green data G0, the first blue data B0, and the first alpha data A0 may respectively correspond to the first luminance data Y0, the first blue chrominance data Cb0, and the first red chrominance data Cr0, and the second luminance data Y1.

In some implementations, the number of bits of each data included in the graphic data 410 in the YCbCr 4:2:2 format is the same as the number of bits of each data included in the user data 420. For example, the number of bits of each data included in the graphic data 410 and the number of bits of each data included in the user data 420 may be 8 bits, but the present disclosure is not necessarily limited thereto. Because the number of bits is the same, the first interface 214 may access the user data 420 corresponding to the graphic data 410 in the YCbCr 4:2:2 format and transmit the same.

The user data 420 may be stored in the memory 213. The processor 211 may control the first interface 214 to transmit the user data 420 in the YCbCr 4:2:2 format. The processor 211 may control the first interface 214 to read the user data 420 from the memory 213 and transmit the user data 420.

The processor 211 may generate a recognition control signal. The processor 211 may transmit the control signal cs including the recognition control signal to the second integrated chip 220. When receiving the user data 420, the second integrated chip 220 may recognize the user data 420 as the first alpha data A0, the first color space data, the second color space data, and the third color space data corresponding to the first pixel PX0 based on the recognition control signal. The processor 224 may receive the user data 420 through the first interface 221 and receive the control signal cs through the third interface 223. The processor 224 may recognize the user data 420 as alpha data and graphic data based on the control signal cs.

The processor 224 may recognize up to a fourth data received through the first interface 221 as user data corresponding to the first pixel PX0, and then may recognize data up to a subsequent fourth data as user data corresponding to the second pixel PX1, and may recognize data up to a subsequent fourth data as user data corresponding to the third pixel PX2, based on the recognition control signal. For example, the processor 224 may recognize first data received through the first interface 221 as the first alpha data A0, second data as the first red data R0, third data as the first green data G0, and fourth data as the first blue data B0, based on the recognition control signal. The processor 224 may recognize fifth data to as second alpha data A1, sixth data as the second red data R1, seventh data as the second green data G1, and eighth data as the second blue data B1. The second integrated chip 220 may recognize data set in the YCbCr 4:2:2 format through the first interface 221 as the user data 420 corresponding to the first pixel PX0 rather than the first luminance data Y0, the first blue chrominance data Cb0, the first red chrominance data Cr0, and the second luminance data Y1, based on the recognition control signal.

The amount of the graphic data 410 transferred by the first interface 214 to the second integrated chip 220 in the YCbCr 4:2:2 format may be smaller than the amount of the user data 420 transferred by the first interface 214 to the second integrated chip 220 in the YCbCr 4:2:2 format. In some implementations, the amount of the user data 420 transferred by the first interface 214 to the second integrated chip 220 in the set video format is greater than twice the amount of the graphic data 410 transferred by the first interface 214 to the second integrated chip 220 in the set video format. In the graphic data 410, four components per two pixels may be transmitted. For example, in the graphic data 410 corresponding to the first pixel PX0 and the second pixel PX1 as the first luminance data Y0, the first blue chrominance data Cb0, the first red chrominance data Cr0, and the second luminance data Y1, four components may be transmitted per the first pixel PX0 and the second pixel PX1.

In the user data 420, four components may be transmitted per one pixel. For example, in the user data 420 corresponding to the first pixel PX0 as the first alpha data A0, the first red data R0, the first green data G0, and the first blue data B0, four components may be transmitted per the first pixel PX0. When data corresponding to the same number of pixels is transmitted, the amount of the user data 420 transferred through the first interface 214 may be greater than twice the amount of the graphic data 410 transferred through the first interface 214.

The first interface 214 may output data included in the user data 420 based on an output order corresponding to the video format. The first interface 214 may output the first alpha data A0, the first color space data, the second color space data, and the third color space data based on the output order corresponding to the video format. The order in which data is output may be different depending on the type of the first interface 214. The first interface 214 may output data included in the user data 420 based on an output order corresponding to the YCbCr 4:2:2 format.

In some implementations, when the YCbCr 4:2:2 format is set, the output order is the first luminance data Y0, the first blue chrominance data Cb0, the second luminance data Y1, and the first red chrominance data Cr0. The first interface 214 may access the first color space data, the second color space data, the first alpha data A0, and the third color space data respectively correspond to the first luminance data Y0, the first blue chrominance data Cb0, the second luminance data Y1, and the first red chrominance data Cr0. The first interface 214 may sequentially output the first color space data, the second color space data, the first alpha data A0, and the third color space data. For example, the first interface 214 may sequentially output the first red data R0, the first blue data B0, the first alpha data A0, and the first green data G0 corresponding to the YCbCr 4:2:2 format.

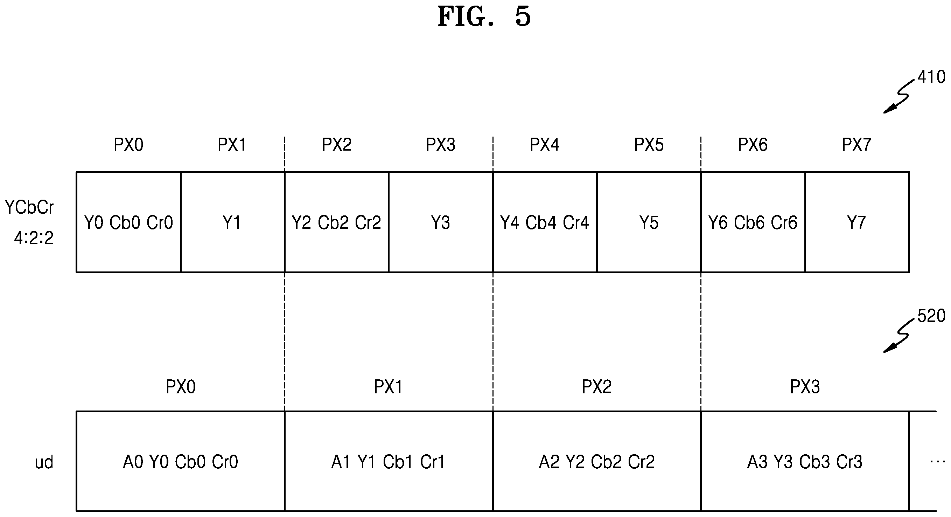

FIG. 5 is a diagram illustrating an example of a method of transmitting user data through an interface. In comparison with FIG. 4, user data 520 of FIG. 5 may include YCbCr data. Redundant descriptions with those given above with reference to FIG. 4 are omitted.

Referring to FIGS. 3 and 5, the user data 520 may include alpha data and graphic data. The user data 520 corresponding to the first pixel PX0 may include the first alpha data A0, the first luminance data Y0, the first blue chrominance data Cb0, and the first red chrominance data Cr0.

The first interface 214 may transfer the user data 520 to the second integrated chip 220 in the YCbCr 4:2:2 format. The first interface 214 may access the first luminance data Y0, the first blue chrominance data Cb0, the first red chrominance data Cr0, and the first alpha data A0 respectively corresponding to the luminance data Y0, the first blue chrominance data Cb0, the first red chrominance data Cr0, and the second luminance data Y1 of the graphic data 410, and transmit the first luminance data Y0, the first blue chrominance data Cb0, the first red chrominance data Cr0, and the first alpha data A0 to the second integrated chip 220.

The processor 224 may recognize the user data 520 received through the first interface 221 as alpha data and graphic data based on a recognition control signal. For example, the processor 224 may recognize first data received through the first interface 221 as the first luminance data Y0, second data as the first blue chrominance data Cb0, third data as the first red chrominance data Cr0, and fourth data as the first alpha data A0, based on the recognition control signal.

The first interface 214 may output data included in the user data 520 based on an output order corresponding to the YCbCr 4:2:2 format. In some implementations, when the YCbCr 4:2:2 format is set, the output order of the graphic data 410 is sequentially the first luminance data Y0, the first blue chrominance data Cb0, the second luminance data Y1, and the first red chrominance data Cr0. In some implementations, the first interface 214 accesses the first alpha data A0 corresponding to the second luminance data Y1 and transmits the same. For example, the first interface 214 may sequentially output the first luminance data Y0, the first blue chrominance data Cb0, the first alpha data A0, and the first red chrominance data Cr0 corresponding to the YCbCr 4:2:2 format.

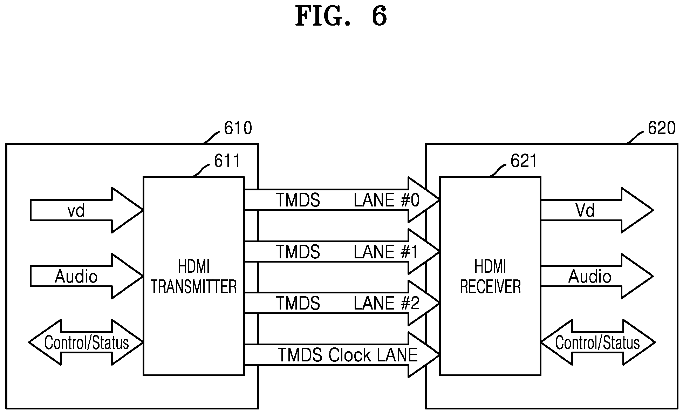

FIG. 6 is a diagram illustrating an example of a first interface. In FIG. 6, a HDMI is described as an example of the first interface.

Referring to FIG. 6, a transmission interface 610 may be a first interface (e.g., the first interface 214 of FIG. 3) included in a first integrated chip (e.g., the first integrated chip 210 of FIG. 3). The transmission interface 610 may transmit a signal corresponding to user data. Specifically, the transmission interface 610 may transmit differential signals corresponding to the user data to a reception interface 620 through a plurality of lanes. The transmission interface 610 may transmit differential signals corresponding to speech data, control data, and other auxiliary data to the reception interface 620 through the plurality of lanes.

The transmission interface 610 may include a HDMI transmitter 611. The HDMI transmitter 611 may receive the user data ud from a sink device. The HDMI transmitter 611 may convert differential signals corresponding to the user data ud and transmit the differential signals to three Transition Minimized Differential Signaling (TMDS) lanes #0, #1, and #2, which are the plurality of lanes. The HDMI transmitter 611 may transmit pixel clocks synchronized with the user data ud transmitted to the three TMDS lanes #0, #1, and #2 to the reception interface 620 through the TMDS Clock lane.

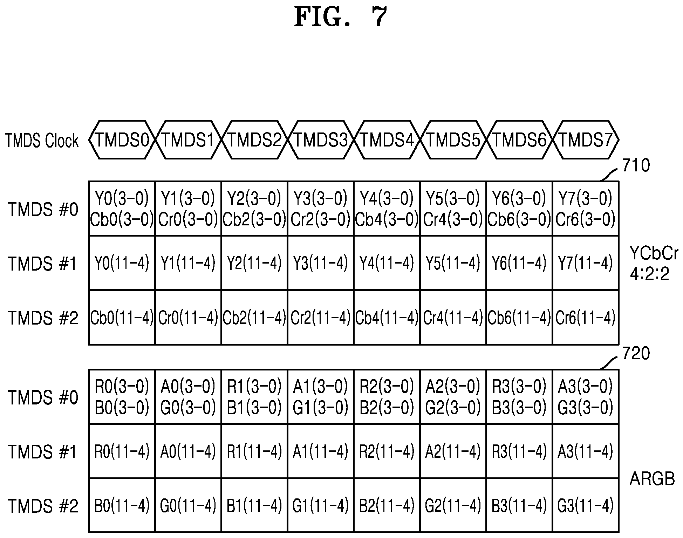

When a video format is set to the YCbCr 4:2:2 format, the HDMI transmitter 611 may transmit the user data ud in the YCbCr 4:2:2 format. The HDMI transmitter 611 may transmit the user data ud according to a lane through which graphic data in the YCbCr 4:2:2 format is transmitted. The HDMI transmitter 611 may transmit the user data ud according to an output order corresponding to the YCbCr 4:2:2 format. A method of transmitting the user data ud is described below with reference to FIG. 7.

The reception interface 620 may receive the user data ud from the transmission interface 610. The reception interface 620 may receive speech data and control data from the transmission interface 610.

The reception interface 620 may include a HDMI receiver 621. The HDMI receiver 621 may receive the user data ud from the HDMI transmitter 611. The HDMI receiver 621 may receive differential signals corresponding to the user data ud through the three TMDS lanes #0, #1, and #2. The HDMI receiver 621 may receive the user data ud in synchronization with pixel clocks received through the TMDS Clock lane. The reception interface 620 may receive the user data ud in the YCbCr 4:2:2 format.

FIG. 7 is a diagram illustrating an example of a method of transmitting user data through a HDMI. FIG. 7 is a diagram illustrating transmission of the user data to the three TMDS lanes #0, #1, and #2 of the HDMI. Redundant descriptions with those given above are omitted.

Referring to FIG. 7, a first transmission figure 710 may show that graphic data is transmitted in the YCbCr 4:2:2 format through the TMDS lanes #0, #1, and #2. In FIG. 7, the TMDS lanes #0, #1, and #2 may sequentially transmit the maximum 8 bits for one pixel clock, but the number of bits is not necessarily limited thereto. For example, the maximum 8 bits including bits 0 to 3 of the first luminance data Y0 and bits 0 to 3 of the first blue chrominance data Cb0 may be synchronized with a pixel clock TMDS0 and transmitted through the TMDS lane #0. The maximum 8 bits including bits 4 to 7 of the first luminance data Y0 may be transmitted through the TMDS lane #1. The maximum 8 bits including bits 4 to 7 of the first blue chrominance data Cb0 may be transmitted through the TMDS lane #2. The transmitted graphic data may include Y, Cb, and Cr components. It is assumed that each of the Y, Cb, and Cr components is 8 bits. Each of Y, Cb, and Cr components may be 10 bits or 16 bits, but is not necessarily limited to the above-described example. Luminance data, blue chrominance data, and red chrominance data may be respectively transmitted through the TMDS lanes #0, #1, and #2.

The bits 0 to 3 of the first luminance data Y0 and the bits 0 to 3 of the first blue chrominance data Cb0 may be synchronized with a pixel clock TMDS0 and transmitted through the TMDS lane #0. The bits 4 to 7 of the first luminance data Y0 may be transmitted through the TMDS lane #1, and the bits 4 to 7 of the first blue chrominance data Cb0 may be transmitted through the TMDS lane #2. The bits 0 to 3 of the second luminance data Y1 and the bits 0 to 3 of the first red chrominance data Cr0 may be synchronized with a pixel clock TMDS1 and transmitted through the TMDS lane #0. The bits 4 to 7 of the second luminance data Y1 may be transmitted through the TMDS lane #1, and the bits 4 to 7 of the first red chrominance data Cr0 may be transmitted through the TMDS lane #2. Bits may be transmitted sequentially in each of the TMDS lanes #0, #1, and #2.

Referring to FIG. 7, a second transmission figure 720 may show that user data is transmitted in the YCbCr 4:2:2 format through the TMDS lanes #0, #1, and #2. In FIG. 7, the TMDS lanes #0, #1, and #2 may sequentially transmit the maximum 8 bits for one pixel clock, but the number of bits is not necessarily limited thereto. For example, the maximum 8 bits of data including bits 0 to 3 of the first red data R0 and bits 0 to 3 of the first blue data B0 may be synchronized with the pixel clock TMDS0 and transmitted through the TMDS lane #0. The maximum 8 bits of data including bits 4 to 7 of the first red data R0 may be transmitted through the TMDS lane #1. The maximum 8 bits of data including bits 4 to 7 of the first blue data B0 may be transmitted through the TMDS lane #2.

In some implementations, the HDMI is a first interface. The user data may include four components of alpha data A, red data R, green data G, and blue data B. The alpha data A, the red data R, the green data G, and the blue data B may be transmitted respectively in correspondence to first luminance data, blue chrominance data, red chrominance data, and second luminance data of graphic data. For example, the first red data R0, the first blue data B0, the first alpha data A0, and the first green data GO may respectively correspond to the first luminance data Y0, the first blue chrominance data Cb0, the second luminance data Y1, and the first red chrominance data Cr0 of graphic data. The transmitted user data may include A, R, G, and B components. Each of A, R, G, and B components may be 8 bits. However, the present disclosure is not necessarily limited thereto, and each of A, R, G, and B components may vary, such as 10 bits or 16 bits. The alpha data A, the red data R, the green data G, and the blue data B may be transmitted through the TMDS lanes #0, #1, and #2.

The bits 0 to 3 of the first red data R0 and the bits 0 to 3 of the first blue data B0 may be synchronized with the pixel clock TMDS0 and transmitted through the TMDS lane #0. The bits 4 to 7 of the first red data R0 may be transmitted through the TMDS lane #1, and the bits 4 to 7 of the first blue data B0 may be transmitted through the TMDS lane #2. The bits 0 to 3 of the first alpha data A0 and the bits 0 to 3 of the first green data G0 may be synchronized with the pixel clock TMDS1 and transmitted through the TMDS lane #0. The bits 4 to 7 of the first alpha data A0 may be transmitted through the TMDS lane #1, and the bits 4 to 7 of the first green data G0 may be transmitted through the TMDS lane #2.

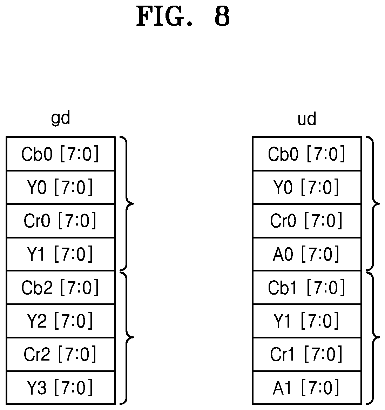

FIG. 8 is a diagram illustrating an example of transmission of graphic data and user data.

Referring to FIG. 8, graphic data gd may be transmitted in the YCbCr 4:2:2 format. For example, each of Y, Cb, and Cr components may be 8 bits. However, the number of bits of each of Y, Cb, and Cr components is not necessarily limited thereto. The graphic data gd may be transmitted through a lane. In some implementations, luminance data, blue chrominance data, and red chrominance data are transmitted through one lane.

A first interface (e.g., the first interface 214 of FIG. 3) may first transmit data of bits 0 to 7 of the first luminance data Y0. The first interface may sequentially transmit bits 0 to 7 of the first blue chrominance data Cb0, bits 0 to 7 of the second luminance data Y1, and bits 0 to 7 of the first red chrominance data Cr0. The first interface may sequentially transmit bit data. For example, the first interface may sequentially transmit bits 0 to 7 of the first luminance data Y0.

Next, the first interface may transmit bits 0 to 7 of the third luminance data Y2. The first interface may sequentially transmit bits 0 to 7 of the third blue chrominance data Cb2, bits 0 to 7 of the fourth luminance data Y3, and bits 0 to 7 of the third red chrominance data Cr2.

The user data ud may be transmitted in the YCbCr 4:2:2 format. Luminance data, blue chrominance data, red chrominance data, and alpha data of the user data ud may be transmitted respectively in correspondence to first luminance data, blue chrominance data, red chrominance data, and second luminance data of the graphic data gd. For example, the user data ud may include Y, Cb, Cr, and A components that are luminance data, blue chrominance data, red chrominance data, and alpha data, and each of the Y, Cb, Cr, and A components may be 8 bits. However, the number of bits of each of Y, Cb, Cr, and A components is not necessarily limited thereto. The user data ud may be transmitted through a lane. In some implementations, alpha data, luminance data, blue chrominance data, and red chrominance data are transmitted through one lane.

The user data ud may be transmitted based on an order in which the graphic data gd is transmitted in the YCbCr 4:2:2 format. The first interface may access the first alpha data A0 corresponding to the second luminance data Y1 of the graphic data gd and transmit the same. The first alpha data A0 may be transmitted based on an order in which the second luminance data Y2 of the graphic data gd is transmitted.

The first interface may first transmit bits 0 to 7 of the first luminance data Y0. The first interface may sequentially transmit bits 0 to 7 of the first blue chrominance data Cb0, bits 0 to 7 of the first alpha data A0, and bits 0 to 7 of the first red chrominance data Cr0. The first interface may sequentially transmit bit data. For example, the first interface may sequentially transmit bits 0 to 7 of the first luminance data Y0, and may sequentially transmit bits 0 to 7 of the first blue chrominance data Cb0.

Next, the first interface may sequentially transmit bits 0 to 7 of the second luminance data Y1, bits 0 to 7 of the second blue chrominance data Cb1, bits 0 to 7 of the second alpha data A1, and bits 0 to 7 of the second red chrominance data Cr1.

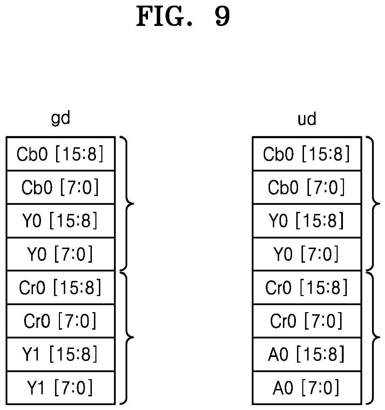

FIG. 9 is a diagram illustrating an example of an order in which user data is transmitted.

Referring to FIG. 9, the graphic data gd may be transmitted in the YCbCr 4:2:2 format. For example, each of Y, Cb, and Cr components may be 16 bits. The graphic data gd may be transmitted through a lane. In some implementations, luminance data, blue chrominance data, and red chrominance data may be transmitted through one lane.

A first interface (e.g., the first interface 214 of FIG. 3) may first transmit data of bits 0 to 7 of the first luminance data Y0. The first interface may sequentially transmit bits 8 to 15 of the first luminance data Y0, bits 0 to 7 of the first blue chrominance data Cb0, and bits 8 to 15 of the first blue chrominance data Cb0. The first interface may sequentially transmit bit data. For example, the first interface may sequentially transmit bits 0 to 7 of the first luminance data Y0.

Next, the first interface may sequentially transmit bits 0 to 7 of the second luminance data Y1, bits 8 to 15 of the second luminance data Y1, bits 0 to 7 of the first red chrominance data Cr0, and bits 8 to 15 of the first red chrominance data Cr0.

The user data ud may be transmitted in the YCbCr 4:2:2 format. Luminance data, blue chrominance data, red chrominance data, and alpha data of the user data ud may be transmitted respectively in correspondence to first luminance data, blue chrominance data, red chrominance data, and second luminance data of the graphic data gd. For example, each of Y, Cb, Cr, and A components may be 16 bits. The user data ud may be transmitted through a lane. In some implementations, alpha data, luminance data, blue chrominance data, and red chrominance data are transmitted through one lane.

The user data ud may be transmitted based on an order in which the graphic data gd is transmitted in the YCbCr 4:2:2 format. The first interface may access the first alpha data A0 corresponding to the second luminance data Y1 of the graphic data gd and transmit the same. The first alpha data A0 may be transmitted based on an order in which the second luminance data Y2 of the graphic data gd is transmitted.

The first interface may first transmit bits 0 to 7 of the first luminance data Y0. The first interface may sequentially transmit bits 8 to 15 of the first luminance data Y0, bits 0 to 7 of the first blue chrominance data Cb0, and bits 8 to 15 of the first blue chrominance data Cb0. The first interface may sequentially transmit bit data. For example, the first interface may sequentially transmit bits 0 to 7 of the first luminance data Y0, and may sequentially transmit bits 8 to 15 of the first luminance data Y0.

Next, the first interface may sequentially transmit bits 0 to 7 of the first alpha data A0, bits 8 to 15 of the first alpha data A0, bits 0 to 7 of the first red chrominance data Cr0, and bits 8 to 15 of the first red chrominance data Cr0.

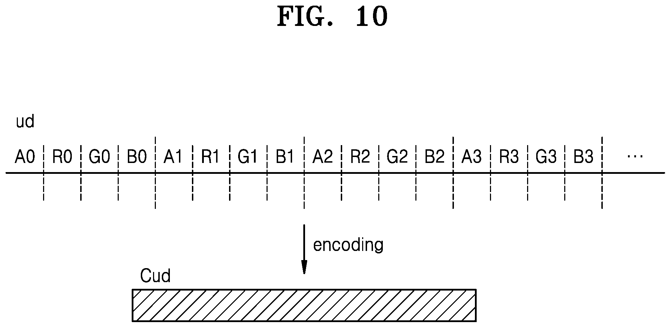

FIG. 10 is a diagram illustrating an example of a method of compressing user data. Specifically, FIG. 10 is a diagram illustrating a method performed by the encoder 212 of FIG. 3 of compressing the user data.

Referring to FIG. 10, an encoder may compress the user data ud. The encoder may compress the user data ud and output compressed user data cud. The compressed user data cud may include compressed alpha data, first color space data, second color space data, and third color space data. The encoder may process and encode the alpha data, the first color space data, the second color space data, and the third color space data as independent components. For example, the encoder may independently compress each of the first alpha data A0, the first red data R0, the first green data G0, and the first blue data B0.

In some implementations, the encoder encodes the user data ud using DSC. DSC is a video compression standard that may compress video for transmission over display links. DSC specifies the compression standard for visually lossless compression. DSC includes intra-frame compression, but may not include inter-frame compression.

The encoder may not compress a plurality of luminance components together when encoding graphic data in the YCbCr 4:2:2 format. The encoder may independently compress the first luminance data, the first blue chrominance data, the first red chrominance data, and the second luminance data. In other words, the first luminance data and the second luminance data may be independently processed and encoded. This may also be applied when encoding the user data ud. Each of the first alpha data A0, the first red data R0, the first green data G0, and the first blue data B0 may be processed and encoded as an independent component. Because each component is independently encoded, each piece of data included in the user data ud may be compressed and transmitted.

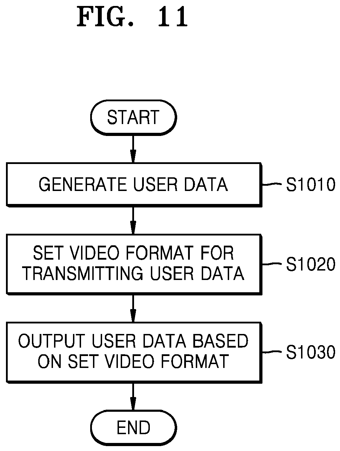

FIG. 11 is a flowchart illustrating an example of an operating method of an integrated chip. Specifically, FIG. 11 is a flowchart illustrating an operating method of the first integrated chip 210 of FIG. 3.

In operation S1010, a first integrated chip may generate user data. The user data may include graphic data and alpha data. The graphic data may mean color space values respectively corresponding to a plurality of pixels implementing a user image, and the alpha data may mean an alpha value that specifies how to blend video data and graphic data. The first integrated chip may generate alpha data and graphic data corresponding to the user image. For example, the first integrated chip may generate alpha data, red data, green data, and blue data corresponding to each of pixels included in the user image.

In some implementations, the first integrated chip encodes the user data. The first integrated chip may process and compress alpha data, first color space data, second color space data, and third color space data corresponding to each of the pixels included in the user data as independent components. For example, the first integrated chip may independently encode the first alpha data, the first blue data, the first green data, and the first red data corresponding to a first pixel. The first integrated chip may encode the user data using DSC.

In operation S1020, the first integrated chip may set a video format for transmitting the user data. The first integrated chip may transmit the user data to a second integrated chip. The first integrated chip may transmit the encoded user data to the second integrated chip. The second integrated chip may alpha blend the graphic data and the video data based on the alpha data.

In some implementations, the first integrated chip set a video format to the YCbCr 4:2:2 format for transmitting the user data. The graphic data may be transmitted in the YCbCr 4:2:2 format. For example, the first integrated chip may set the video format for transmitting first luminance data corresponding to a first pixel that is graphic data, first blue chrominance data, first red chrominance data, and second luminance data corresponding to a second pixel. In the graphic data, four components of first luminance data, first blue chrominance data, first red chrominance data, and second luminance data may be transmitted in the YCbCr 4:2:2 format. The user data including four components may also be transmitted in the YCbCr 4:2:2 format.

In some implementations, the first integrated chip generates a recognition control signal. The recognition control signal may refer to a signal for controlling the second integrated chip to recognize data of the user data. For example, when the video format is set to the YCbCr 4:2:2 format, the first integrated chip may generate a recognition control signal for controlling the second integrated chip to recognize the user data as alpha data and graphic data. The recognition control signal may be transmitted to the second integrated chip through a third interface (e.g., the third interface 216 in FIG. 3), and the user data may be transmitted to the second integrated chip through a first interface (e.g., the first interface 214 in FIG. 3). By receiving the recognition control signal, although the user data is transmitted in the YCbCr 4:2:2 format through the recognition control signal, the second integrated chip may recognize that the alpha data and the graphic data are transmitted.

In operation S 1030, the first integrated chip may output the user data based on the set video format. When the video format is set to YCbCr 4:2:2, the first integrated chip may transmit the user data in the YCbCr 4:2:2 format. The first integrated chip may transmit alpha data and graphic data in the YCbCr 4:2:2 format at a time.

The first integrated chip may transmit the alpha data and the graphic data to the second integrated chip without separating the alpha data from the user data. The user data including the alpha data is transmitted, which may not require processing time for additionally separating the alpha data from the graphic data, and thus, the processing time may be reduced. Even when there is no additional interface for transmitting the separated alpha data, the alpha data and the graphic data may be transmitted together, and thus, the production cost may be reduced.

The first integrated chip may access the first alpha data, the first color space data, the second color space data, and the third color space data, which are user data corresponding to the first pixel PX0 respectively correspond to the first luminance data, the first blue chrominance data, the first red chrominance data, and the second luminance data of the graphic data, and transmit the first alpha data, the first color space data, the second color space data, and the third color space data to the second integrated chip. The first integrated chip may output data included in the user data based on an output order corresponding to the video format. The first integrated chip may output data included in the user data 420 based on an output order corresponding to the YCbCr 4:2:2 format.

In some implementations, when the YCbCr 4:2:2 format is set, the output order of the graphic data is the first luminance data, the first blue chrominance data, the second luminance data, and the first red chrominance data. The first integrated chip may access first luminance data, first blue chrominance data, second luminance data, and first red chrominance data respectively corresponding to first color space data, second color space data, first alpha data, and third color space data that are the user data. The first integrated chip may sequentially output the first color space data, the second color space data, the first alpha data, and the third color space data. That is, even though the YCbCr 4:2:2 format is set, the data that is output may be in the order of: first color space data, second color space data, first alpha data, and the third color space data.

Embodiments described herein transmit alpha and graphic data in response to a transmission order of YCbCr 4:2:2. The transmitted data can be recognized as alpha and graphic data, respectively, rather than YCbCr 4:2:2 video/graphic data transmitted based on recognition control signals. Therefore, when graphic data is transmitted in the YCbCr 4:2:2 format, for example, the first luminance data Y0, the first blue chrominance data Cb0, the first red chrominance data Cr0, and the second luminance data Y1 of the second pixel PX1 can be transmitted as four components.

If user data is transmitted in YCbCr 4:2:2 format, it can be that alpha and graphic data are transmitted at once. Alpha data per pixel corresponds to one component, and graphic data includes three components. The processor can transmit one pixel of alpha data and graphic data as four components. In other words, when only graphic data is transmitted in the YCbCr 4:2:2 format, the processor packs and transmits four components: Y0, Cb0, Cr0, and Y1, and the second integrated chip recognizes that it is Y0, Cb0, Cr0 of PX0, and Y1 of PX1. However, in the embodiments described herein, if user data (including graphic data and alpha data) is transmitted in the YCbCr 4:2:2 format, the processor can pack and transmit four components: A0, R0, G0, B0, and B0 (or A0, Y0, Cb0, Cr0), and the second integrated chip can recognize that it is A0, R0, G0, B0 (or A0, Y0, Cb0, Cr0) of PX0.

While the present disclosure has been particularly shown and described with reference to implementations thereof, it will be understood that various changes in form and details may be made therein without departing from the scope of the following claims.

## Claims

1. An integrated chip configured to communicate with another integrated chip, the integrated chip comprising:
a processor configured to generate user data comprising (i) graphic data representing color space values of each of a plurality of pixels for a user image and (ii) alpha data representing an alpha value that specifies how to blend video data and the graphic data, and to set a video format for transmitting the user data; and
a first interface configured to transfer, to the other integrated chip, the user data in the video format.

2. The integrated chip of claim 1, wherein the video format comprises a YCbCr 4:2:2 format.

3. The integrated chip of any preceding claim, wherein, based on the video format being YCbCr 4:2:2, the processor is configured to transfer, to the other integrated chip, a recognition control signal for controlling the other integrated chip to recognize the user data as the alpha data and the graphic data.

4. The integrated chip of any preceding claim, wherein
the graphic data comprises first color space data, second color space data, and third color space data, and
each of the first color space data, the second color space data, and the third color space data represents at least one of luminance information and color information.

5. The integrated chip of claim 4, wherein the first interface is configured to output the alpha data, the first color space data, the second color space data, and the third color space data based on an output order corresponding to the video format.

6. The integrated chip of claim 4 or claim 5, further comprising an encoder configured to encode the user data,
wherein the encoder is configured to process the alpha data, the first color space data, the second color space data, and the third color space data as independent components and compress the user data.

7. The integrated chip of claim 6, wherein the first interface is configured to transfer, from the encoder to the other integrated chip, compressed user data in the video format.

8. The integrated chip of any preceding claim, wherein the first interface is one of a Mobile Industry Processor Interface, a High Definition Multimedia Interface, a Display Port, and a Peripheral Component Interconnect express.

9. The integrated chip of any preceding claim, further comprising an encoder configured to encode the user data,
wherein the encoder is configured to encode the user data by using display stream compression.

10. The integrated chip of any preceding claim, wherein an amount of the user data transferred by the first interface to the other integrated chip in the video format is greater than twice an amount of the graphic data transferred by the first interface to the other integrated chip in the video format.

11. The integrated chip of any preceding claim, further comprising a second interface configured to transfer, to the other integrated chip, the video data received from a source device.

12. An electronic device comprising:
a first integrated chip configured to generate user data corresponding to a user image comprising a first pixel and a second pixel; and
a second integrated chip configured to receive the user data,
wherein the first integrated chip comprises:
a processor configured to set a video format for transmitting (i) first luminance data, first blue chrominance data, and first red chrominance data corresponding to the first pixel, and (ii) second luminance data corresponding to the second pixel; and
an interface configured to:
access the user data for the first pixel, the user data comprising first alpha data, first color space data, second color space data, and third color space data that respectively correspond to the first luminance data, the first blue chrominance data, the first red chrominance data, and the second luminance data, and
transmit, to the second integrated chip, the first alpha data, the first color space data, the second color space data, and the third color space data.

13. The electronic device of claim 12, wherein:
the video format comprises a YCbCr 4:2:2 format, and
the YCbCr 4:2:2 format is used to transfer a subset of a set, wherein the subset comprises the first luminance data, the first blue chrominance data, the first red chrominance data, and the second luminance data, and the set comprises the first luminance data, the first blue chrominance data, the first red chrominance data, the second luminance data corresponding to the second pixel, second blue chrominance data, and second red chrominance data.

14. The electronic device of claim 12 or claim 13, wherein the processor is configured to transfer, to the second integrated chip, a recognition control signal for controlling the second integrated chip to recognize the user data as the first alpha data, the first color space data, the second color space data, and the third color space data.

15. An operating method of an integrated chip, the operating method comprising:
generating user data comprising (i) graphic data representing color space values of each of a plurality of pixels implementing a user image and (ii) alpha data representing an alpha value that specifies how to blend video data and the graphic data;
setting a video format for transmitting the user data to another integrated chip alpha blending the graphic data and the video data based on the alpha data; and
outputting the user data based on the set video format.
